# EUROPEAN PATENT SPECIFICATION

(11) **EP 1 685 336 B1**
(45) Date of publication and mention of the grant of the patent: **19.10.2011**
(21) Application number: 04799029.6
(22) Date of filing: 19.11.2004
(51) Int. Cl.: F16H 1/28

(54) **GEAR TRANSMISSION UNIT WITH PLANET CARRIER**
ZAHNRADGETRIEBEEINHEIT MIT PLANETENRADTRÄGER
UNITE DE TRANSMISSION A ENGRENAGES COMPORTANT UN PORTE-SATELLITES

(30) Priority: 19.11.2003 GB 0326933
(43) Date of publication of application: 02.08.2006
(60) Divisional application: 06075352.2
(73) Proprietor: Hansen Transmissions International N.V., 2550 Kontich (BE)
(72) Inventor: SMOOK, Warren Hansen Transmissions Int. NV, 2650 Edegem, Antwerp (BE); BOGAERT, Roger Hansen Transmissions Int. NV, 2650 Edegem, Antwerp (BE)
(74) Representative: Donné, Eddy
(86) International application number: PCT/IB2004/003949
(87) International publication number: WO 2005/050059

(56) References cited:
- WO-A-02/14690
- WO-A-02/079644
- WO-A-03/002891
- DE-A1- 2 235 448
- US-A1- 2003 123 984
- US-B1- 6 232 673

## Description

This invention relates to a planet carrier for a gear transmission unit and in particular, though not exclusively, to a planetary type gear transmission unit It may be applied to a gear transmission unit for a wind turbine.

Such a planetary type gear transmission unit for a wind turbine is for example known from WO 02/073649, which constitutes the closest prior art.

There is a continuing demand for larger wind turbines especially for offshore sites due to scarcity of suitable sites and cost of civil works. At the same time the requirements for reduction of size and weight of the machines and their components become more and more important. Typically a wind turbine rotor drives the low speed shaft of a gear transmission unit, which transforms torque and speed of the rotor to the required torque and speed of an electrical generator.

Integration of the components in a wind turbine is a way to reduce the weight and to make the drive assembly more compact, but it is important that the design and execution of the drive assembly avoids mutual interference of the external and internal loads on the different components. It is also important that the construction of an integrated drive assembly allows effective lubrication to be achieved economically and reliably.

The present invention is directed particularly but not exclusively to the problem of providing an accurate and long life support for planet gears in a manner which is economical and which may be utilized on a wind turbine assembly.

In accordance with one aspect of the present invention a planetary type gear transmission unit comprises sun, planet and ring gears and a planet carrier, said planet carrier comprising a planet bogie plate which supports and locates circumferentially spaced planet gear bearings on which planet gears are mounted, and at least some of said bearings being taper roller type bearings.

The gear unit may comprise planet gears which are arranged in axially aligned pairs. That is, the planet gears of a pair may be co-axially arranged.

The bearings may support respective pairs of aligned planet gears, typically the two gears of each pair being positioned at opposite sides of the plate.

The bearing(s) for each circumferentially spaced planet gear position may be supported on a shaft which in use is able to self adjust in said angular position relative to the bogie plate.

Alternatively said shaft may be substantially rigidly secured to the bogie plate. The bogie plate may be of a kind which, in consequence of elastic deformation, is compliant to an extent sufficient to allow self adjustment of the angular position of the shaft relative to the axis of rotation of the ring gear, for example in the case of a shaft which is substantival rigidly secured to the bogie plate.

As considered in an axial direction parallel with the axis of rotation of the planet carrier, a main bearing for rotatably supporting a ring gear relative to a planet carrier may lie at a position substantially aligned axially with the axial position of at least the ring gear of the gear transmission unit.

In some embodiments of the invention it may be preferred that the sun, planet and ring gears lie in a transverse plane (perpendicular to the rotation axis of said rotational forces) which also contains said main bearing.

The ring gear may provide axial and radial locations for the main bearing. The ring gear may have a radially outer surface of a stepped profile to define a shoulder for axial location of an inner bearing ring of the main bearing. The inner bearing ring may be secured axially and non-rotatably between said shoulder a supporting structure.

The ring gear may be provided with a reinforcing ring, and said reinforcing ring may extend axially and or radially beyond the toothed surface of the ring gear. Said reinforcing ring may provide an axial location of the main bearing.

The main bearing may comprise a double taper bearing, and said double taper bearing may comprise a single outer bearing ring. The double taper bearing may comprise rollers arranged in an 0 configuration in which the rollers of one series increase in diameter in a direction away from the rollers of the other series of the pair.

In a yet further of its aspects the present invention provides a wind turbine comprising rotors, a generator and a drive assembly comprising a gear transmission unit of a type in accordance with the present invention. In said drive assembly the ring gear typically may be supported non-rotatably relative to supporting structure.

A part of the gear transmission unit, e.g. a housing thereof, may be arranged to support an electrical generator.

The invention will now be described, by way of example only, with reference to the accompanying diagrammatic drawings in which: -
Figure 1 is an elevation view of a wind turbine having a gear transmission unit of the present invention;
Figure 2 is a sectional view of part of a known gear transmission unit;
Figure 3 shows part of Figure 2 in more detail, and
Figure 4 shows a particular feature of the present invention.

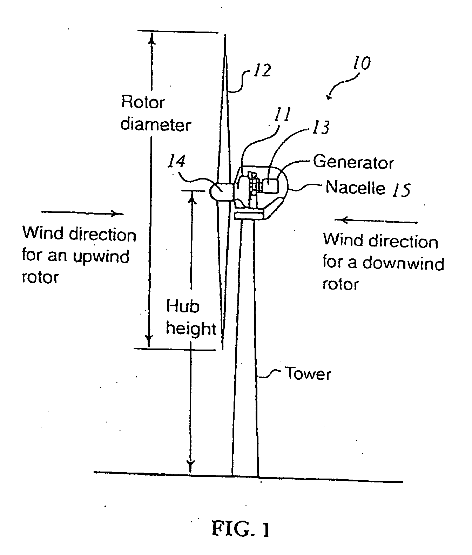

A wind turbine 10 (see Figure 1) comprises a gear transmission unit 11 which acts to transmit torque from rotor blades 12 and a rotor hub 14 to an electrical generator 13, the gear transmission unit comprising an epicyclic gear unit The gear transmission unit and generator are housed in and supported by a nacelle 15.

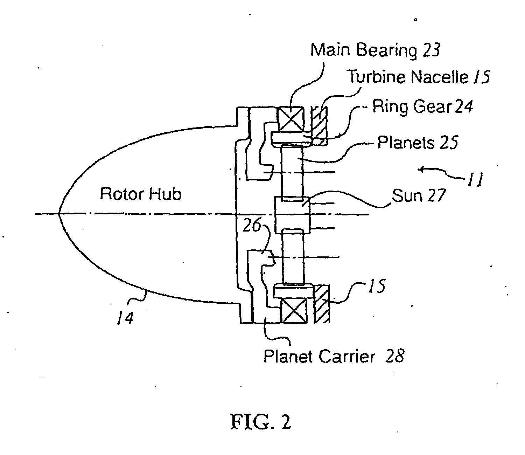

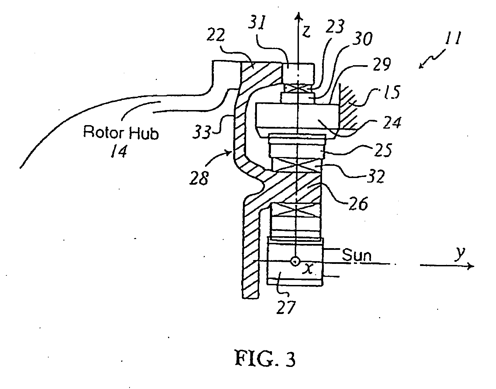

The gear transmission unit 11 is now described in more detail with reference to Figures 2 and 3. The gear transmission unit 11 comprises an epicyclic gear unit having four circumferentially spaced planet gears 25, a sun gear 27 a planet carrier 28, and a ring gear 24 which is non-rotatably mounted relative to the nacelle structure 15.

The sun gear is connected to an output shaft (not shown) which connects either to a further gear unit or direct to the rotor of the generator 13.

The radially outer surface 29 of the ring gear 24 provides location and support for the inner ring 30 of a main bearing 23.

The outer ring 31 of the main bearing has secured thereto the rotor hub 14 and, interposed between the rotor hub and ring 31, the outer region 22 of the planet carrier 28.

In a prior proposed construction the planet carrier 28 of Figure 3 comprises four bearing support studs 26 uniformly circumferentially spaced to locate bearings 32 which rotatably support the four planet gears 25. The planet carrier 28 has an annular region 33 which extends radially between the radial position of the bearing studs 26 and the outer region 22 and is designed to be relatively stiff, in a circumferential direction about the Y axis, for transmission of torque between the region 22 and the bearing studs 26, but to be relatively flexible about the X and Z axis.

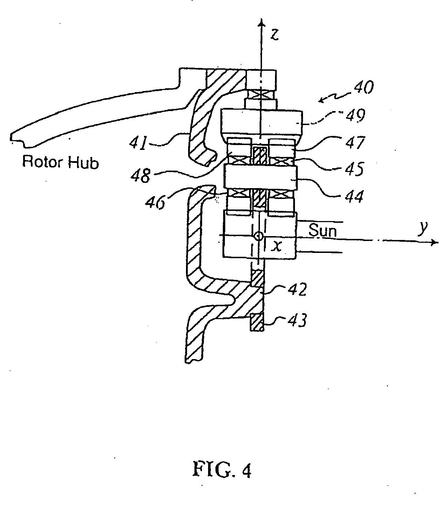

In accordance with the present invention the planet carrier 28 is replaced by a planet carrier 41 (see Figure 4) provided, in this embodiment, with three integral and uniformly circumferentially spaced studs 42 which support a planet bogie plate 43. The planet bogie plate 43 provides support for three circumferentially uniformly spaced shafts 44 arranged each (as viewed in the plane of Figure 4) to self adjust in angular position on the plate 43. Each shaft 44 provides support, at opposite sides of the plate 43, for a pair of taper roller bearings 45, 46 about which each of a pair of planet gears 47, 48 are rotatably mounted for engagement with the ring gear 49.

In the aforedescribed construction the torque acting on the rotor hub 14 under action of the rotor blades 12 is transmitted to the planet gears 47, 48 via the planet carrier 41 rotatably mounted at is outer region to the outer ring 31 of bearing 23. Bending moments and axial forces in the Y direction exerted by the rotor hub in this construction are transmitted direct to the bearing 23. The flexibility of the annular portion 33 of the planet carrier 28 assists to substantially isolate those forces from the planet gears.

The present invention thus teaches, in its broadest aspect, that a bogie of a planet carrier is provided with roller bearings which are of the taper type for the support of planet gears.

The present invention teaches in another of its aspects that the planet gears may be supported, via their bearings, on a shaft of the so-called flexpin type, such as described in GB 1,101,131 in the context of a simple type of epicyclic gear. The present invention, in this one of its aspects, perceives that special benefit may be achieved by utilising a shaft of the flexpin type in the context of an epicyclic gear unit having a planet bogie. This benefit may be attained irrespective of whether, as described above, the planet gear bearings are taper roller bearings, or whether they are cylindrical roller bearings (not claimed). Use in constructions having other bearing arrangements (not claimed) and such as spherical bearings, is not excluded.

A variation of the Figure 4 construction to utilise a flexpin as the shaft 44 thereof is now discussed in more detail

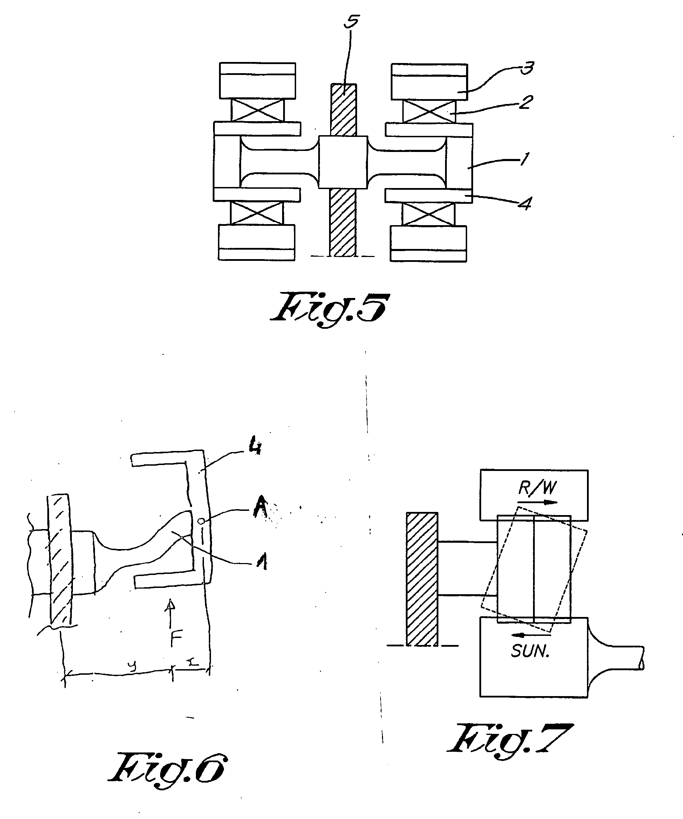

Figure 5 shows the basic layout. The back-plate 5, i.e. bogie plate, drives the inner part of the planet shaft 1 which in turn carries the outer part or sleeve (4), the planet bearing 2 and the planet 3. The function of the flexpin in the context of application to a bogie is now described briefly with reference to Figure 6. An external force (for instance the tangential planet forces) will cause the inner shaft 1 to bend as a result of the bending moment F*y. Point "A" is offset by a distance "x" from the application point of the force causing a moment F*x. This bending moment at "A" works in the opposite direction to the first one and thus causes the outer sleeve to counter rotate in the direction of the second moment.

The amount of compensation will depend upon the distances x and y as well as the designs of the inner shaft and sleeve. The use of the flexpin is advantageous for load distribution over the tooth flanks (KHB) as well as load sharing between the planets in the planetary cell (K_gamma). The equality of loads between the planets (K_gamma) will be inversely proportional to the stiffness of the planet shafts and it is thus preferred to make the planet shafts as flexible as possible.

The amount of compensation could be equal at both sides of the central bogie plate but does not have to be. Particularly if the gear unit comprises a helical sun gear it may be advantageous to choose different amounts of compensation in order for the left and right planets to better follow the helical deformation of the sun shaft under load. (Due to torsion). This would not be possible in the classical flexpin designs as there is only one row of planets, but is possible in the application to a planet bogie.

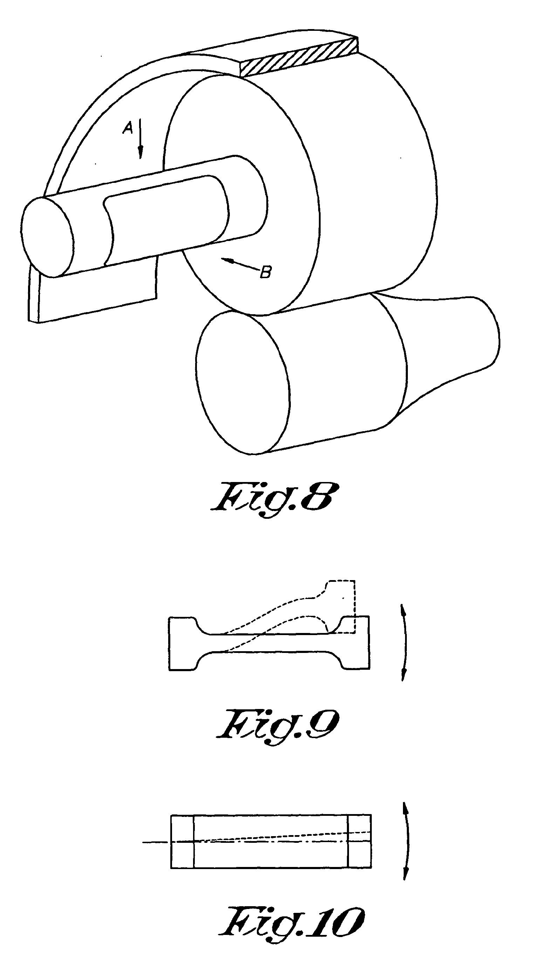

When using helical teeth in a planetary cell, a moment is created by the axial components of the normal tooth forces in the ring gear and sun meshes respectively (see Figure 7). This unwanted effect causes the planets to skew and the amount of skewing is inversely proportional to the planet shaft stiffness. With a flexpin design, the planet shaft assembly (inner shaft and sleeve) is less stiff than in conventional designs and will thus cause more planet skewing. This is the reason that the flexpin is usually only used with spur gearing. A possible solution to this problem could come from making the planet shaft (inner or combination) an-isotropic as far as it's stiffness goes. Figures 8 to 10 show a planetary system employing such a design. The inner shaft is made in such a way as to still allow the needed flexibility in the tangential direction (see Figure 9) but to be as stiff as possible in a plane normal to the tangential direction (Figure 10). In this way it could become possible to use the flexpin in combination with helical teeth.

## Claims

1. A planetary type gear transmission unit (11) comprises sun (27) planet (25) and ring (24) gears and a planet carrier (28) said planet carrier (26) comprising a planet bogie plate (43) which supports and locates circumferentially spaced planet gear bearings (45, 46) which planet gears (47, 48) are mounted, **characterised in that** at least some of said bearings are taper roller bearings (45, 46).

2. A gear transmission unit according to claim 1, **characterised in that** it comprises planet gears (47, 48) arranged in axially aligned pairs.

3. A gear transmission unit according to claim 2, **characterised in that** (45, 46) the bearings support respective pairs of aligned planet gears (47, 48).

4. A gear transmission unit according to claim 3, **characterised in that** two gears (47, 48) of each pair are positioned at opposite sides of the plate (43).

5. A gear transmission unit according to any one of the preceding claims, **characterised in that** each planet gear (47, 48) of a pair is mounted on a pair of tapered roller bearings (45, 46)

6. A gear transmission unit according to any one of the preceding claims, **characterised in that** it comprises a pair of tapered roller bearings (45, 46) arranged in an O configuration.

7. A gear transmission unit according to any one of the preceding claims, **characterised in that** the bearings (45, 46) for each circumferentially spaced planet gear (47, 48) position are supported on a shaft (44) which, in use, self adjusts in said angular position relative to the bogie plate (43).

8. A gear transmission unit according to any one of claims 1 to 6, **characterised in that** the bearings (45, 46) for at least some circumferentially spaced planet gear (47, 48) positions are supported on a shaft (44) which is substantially, rigidly secured to the bogie plate (43).

9. A gear transmission unit according to claim 8, **characterised in that** each said shaft (44), is substantially rigidly secured to the bogie plate (43).

10. A gear transmission unit according to any one of claims 7 to 9, **characterised in that** the bogie plate (43) is able to deform elastically to allow self adjustment of the angular position of the or each shaft (44) relative to the axis of rotation of the ring gear (24).

11. A gear transmission unit according to any one of the preceding claims, **characterised in that** the main bearing (27) comprises an inner ring bearing surface (30) of a diameter greater than that of the toothed surface of the ring gear (24).

12. A gear transmission unit according to any one of the preceding claims **characterised in that** the planet carrier provides a radially extending torque transmissions path which is torsionally stiff but relatively compliant in an axial direction parallel with the axis about which the rotational forces act.

13. A gear transmission unit according to any one of the preceding claims, **characterised in that** the planet gears (47, 48) are supported relative to the bogie plate (43) by a shaft (44) of the flexpin type.

## Patentansprüche

1. Zahnradgetriebeeinheit (11) vom Planetenradtyp, umfassend Sonnen- (27), Planeten- (25) und Ringräder (24) und einen Planetenträger (28), wobei der Planetenträger (28) eine Planetenlaufplatte (43) umfasst, die in Umfangsrichtung beabstandete Planetenradlager (45, 46) trägt und positioniert, auf welchen Planetenräder (47, 48) montiert sind, **dadurch gekennzeichnet, dass** mindestens manche der Lager Kegelrollenlager (45, 46) sind.

2. Zahnradgetriebeeinheit nach Anspruch 1, **dadurch gekennzeichnet, dass** sie Planetenräder (47, 48) umfasst, die in axial ausgerichteten Paaren angeordnet sind.

3. Zahnradgetriebeeinheit nach Anspruch 2, **dadurch gekennzeichnet, dass** die Lager (45, 46) jeweilige Paare ausgerichteter Planetenräder (47, 48) tragen.

4. Zahnradgetriebeeinheit nach Anspruch 3, **dadurch gekennzeichnet, dass** zwei Räder (47, 48) jedes Paars an entgegengesetzten Seiten der Platte (43) positioniert sind.

5. Zahnradgetriebeeinheit nach einem der vorgenannten Ansprüche, **dadurch gekennzeichnet, dass** jedes Planetenrad (47, 48) eines Paars auf einem Paar von Kegelrollenlagern (45, 46) montiert ist.

6. Zahnradgetriebeeinheit nach einem der vorgenannten Ansprüche, **dadurch gekennzeichnet, dass** sie ein in einer O-Konfiguration angeordnetes Paar von Kegelrollenlagern (45, 46) umfasst.

7. Zahnradgetriebeeinheit nach einem der vorgenannten Ansprüche, **dadurch gekennzeichnet, dass** die Lager (45, 46) für jede in Umfangsrichtung beabstandete Planetenrad(47, 48)-Position auf einer Welle (44) getragen werden, die sich im Gebrauch selbst in der Winkelposition bezüglich der Laufplatte (43) einstellt.

8. Zahnradgetriebeeinheit nach einem der Ansprüche 1 bis 6, **dadurch gekennzeichnet, dass** die Lager (45, 46) für mindestens manche in Umfangsrichtung beabstandeten Planetenrad(47, 48)-Positionen auf einer Welle (44) getragen werden, die im Wesentlichen starr an der Laufplatte (43) befestigt ist.

9. Zahnradgetriebeeinheit nach Anspruch 8, **dadurch gekennzeichnet, dass** jede besagte Welle (44) im Wesentlichen starr an der Laufplatte (43) befestigt ist.

10. Zahnradgetriebeeinheit nach einem der Ansprüche 7 bis 9, **dadurch gekennzeichnet, dass** die Laufplatte (43) fähig ist, sich elastisch zu verformen, um ein Selbsteinstellen der Winkelposition der oder jeder Welle (44) bezüglich der Drehachse des Ringrades (24) zu gestatten.

11. Zahnradgetriebeeinheit nach einem der vorgenannten Ansprüche, **dadurch gekennzeichnet, dass** das Hauptlager (27) eine innere Ringlagerfläche (30) mit einem Durchmesser, der größer als der der gezahnten Oberfläche des Ringrades (24) ist, aufweist.

12. Zahnradgetriebeeinheit nach einem der vorgenannten Ansprüche, **dadurch gekennzeichnet, dass** der Planetenradträger einen sich radial erstreckenden Drehmomentübertragungsweg bereitstellt, der verwindungssteif ist, jedoch relativ nachgiebig in einer axialen Richtung parallel zu der Achse, um die die Drehkräfte wirken.

13. Zahnradgetriebeeinheit nach einem der vorgenannten Ansprüche, **dadurch gekennzeichnet, dass** die Planetenräder (47, 48) bezüglich der Laufplatte (43) durch eine Welle (44) vom Flexpin-Typ getragen werden.

## Revendications

1. Unité d'entraînement par engrenages de type planétaire (11) comprenant une roue solaire (27), un satellite (25) et une couronne de train planétaire (24), ainsi qu'un porte-satellites (28), ledit porte-satellites (28) comprenant une plaque bogie de satellite (43) qui supporte et dispose des paliers de roues planétaires (45, 46) espacés en direction circonférentielle sur lesquels sont montées les roues planétaires (47, 48), **caractérisée en ce qu'**au moins un certain nombre desdits paliers sont des roulements à rouleaux coniques (45, 46).

2. Unité d'entraînement par engrenages selon la revendication 1, **caractérisée en ce qu'**elle comprend des roues planétaires (47, 48) arrangées par paires alignées en direction axiale.

3. Unité d'entraînement par engrenages selon la revendication 2, **caractérisée en ce que** les paliers (45, 46) supportent des paires respectives de roues planétaires alignées (47, 48).

4. Unité d'entraînement par engrenages selon la revendication 3, **caractérisée en ce que** deux engrenages (47, 48) de chaque paire sont disposés sur les côtés opposés de la plaque (43).

5. Unité d'entraînement par engrenages selon l'une quelconque des revendications précédentes, **caractérisée en ce que** chaque roue planétaire (47, 48) d'une paire est montée sur une paire de roulements à rouleaux coniques (45, 46).

6. Unité d'entraînement par engrenages selon l'une quelconque des revendications précédentes, **caractérisée en ce qu'**elle comprend une paire de roulements à rouleaux coniques (45, 46) arrangée dans une configuration en O.

7. Unité d'entraînement par engrenages selon l'une quelconque des revendications précédentes, **caractérisée en ce que** les paliers (45, 46) pour chaque position de roue planétaire (47, 48) espacée en direction circonférentielle sont supportés sur un arbre (44) qui, en état de marche, se règle automatiquement dans ladite position angulaire par rapport à la plaque bogie (43).

8. Unité d'entraînement par engrenages selon l'une quelconque des revendications 1 à 6, **caractérisée en ce que** les paliers (45, 46) pour au moins un certain nombre des positions des roues planétaires (47, 48) espacées en direction circonférentielle sont supportés sur un arbre (44) qui est fixé de manière essentiellement rigide à la plaque bogie (43).

9. Unité d'entraînement par engrenages selon la revendication 8, **caractérisée en ce que** chacun desdits arbres (44) est fixé de manière essentiellement rigide à la plaque bogie (43).

10. Unité d'entraînement par engrenages selon l'une quelconque des revendications 7 à 9, **caractérisée en ce que** la plaque bogie (43) est à même de se déformer élastiquement pour permettre un réglage automatique de la position angulaire de l'arbre ou de chacun des arbres (44) par rapport à l'axe de rotation de la couronne de train planétaire (24).

11. Unité d'entraînement par engrenages selon l'une quelconque des revendications précédentes, **caractérisée en ce que** le palier principal (27) comprend une surface de roulement (30) comportant une bague de roulement intérieur dont le diamètre est supérieur à celui de la surface dentée de la couronne de train planétaire (24).

12. Unité d'entraînement par engrenages selon l'une quelconque des revendications précédentes, **caractérisée en ce que** le porte-satellite procure une voie de transmission de couple s'étendant en direction radiale, qui résiste à la torsion, mais qui est relativement souple dans une direction axiale parallèle à l'axe autour duquel s'exercent les forces de rotation.

13. Unité d'entraînement par engrenages selon l'une quelconque des revendications précédentes, **caractérisée en ce que** les roues planétaires (47, 48) sont supportées par rapport à la plaque bogie (43) par un arbre (44) du type Flexpin.
